# EUROPEAN PATENT APPLICATION

(11) **EP 2 246 297 A1**
(43) Date of publication of application: **03.11.2010**
(21) Application number: 09710037.4
(22) Date of filing: 13.02.2009
(51) Int. Cl.: C01B 31/02

(54) **NANOCARBON MATERIAL DISPERSION, METHOD FOR PRODUCING THE SAME, AND NANOCARBON MATERIAL STRUCTURE**

(30) Priority: 14.02.2008 JP 2008033640
(71) Applicant: The University of Tokyo, Bunkyo-Ku Tokyo 113-8654 (JP)
(72) Inventor: KATO, Masaru, Tokyo 113-8654 (JP); MARUYAMA, Shigeo, Tokyo 113-8654 (JP); AIDA, Takuzo, Tokyo 113-8654 (JP); FUKUSHIMA, Takanori, Tokyo 113-8654 (JP); YAMAMOTO, Tatsuhiro, Tokyo 113-8654 (JP); MIYAUCHI, Yuhei, Tokyo 113-8654 (JP)
(74) Representative: Jump, Timothy John Simon
(86) International application number: PCT/JP2009/052417
(87) International publication number: WO 2009/102023

(57) **Abstract**

There is provided a method for producing a nanocarbon material dispersion in which individual nanocarbon materials are separated from each other by mild processing. The method for producing a nanocarbon material dispersion of the present invention is **characterized by** including a step of preparing a composition by mixing a nanocarbon material with a dispersion medium comprising an amphiphilic triphenylene derivative, and a step of subjecting the composition to a mechanical dispersing processing.

## Description

### TECHNICAL FIELD

The present invention relates to a nanocarbon material dispersion, a method for producing the same, and a nanocarbon material structure.
This application is based on and claims priority from Japanese Patent Application No. 2008-033640 filed on February 14, 2008, the disclosure of which is incorporated by reference herein.

### BACKGROUND ART

It is extremely important to develop a simple method for dispersing carbon nanotubes in order to utilize carbon nanotubes in various fields and to know the properties of carbon nanotubes in detail. In particular, it is important to develop a simple method for dispersing single-wall carbon nanotubes (SWNTs) which have an interesting electric characteristic where the single-wall carbon nanotubes exhibit a metal-like or a semiconductor-like characteristic in accordance with a chiral index (n, m).
However, carbon nanotubes are easily aggregated into a bundle shape or a rope shape by a strong Van der Waals force, which makes it difficult to use carbon nanotubes as a nano-material. For this reason, various dispersant media including a surface activating agent, porphyrin, polycyclic aromatic hydrocarbon, DNA, peptide, polysaccharide, and the like have been reported in order to disperse single-wall carbon nanotubes in solvents (see Non-Patent Citations 1 to 10). Moreover, it has been considered that the satisfactory dispersion of carbon nanotubes makes it possible to make a selective separation in accordance with a diameter and chirality (see Non-Patent Citations 11 to 13).
[Non-Patent Citation 1] M. J. O'Connell, S. M. Bachilo, C. B. Huffman, V. C. Moore, M. S. Strano, E. H. Haroz, K. L. Rialon, P. J. Boul, W. H. Noon, C. Kittrell, J. Ma, R. H. Hauge, R. B. Weisman, R. E. Smalley, Science 297 (2002) 593.
[Non-Patent Citation 2] Y. Lin, S. Taylor, H. Li, K. A. S. Fernando, L. Qu, W. Wang, L. Gu, B. Zhou, Y.-P. Sun: J. Mater. Chem. 14 (2004) 527.
[Non-Patent Citation 3] V. C. Moore, M. S. Strano, E. H. Haroz, R. H. Hauge, R. E. Smalley: Nano Lett. 3 (2003) 1379.
[Non-Patent Citation 4] H. Li, B. Zhou,Y Lin, L. Gu, W. Wang, K. A. S. Fernando, S. Kumar, L. F. Allard,Y.-P. Sun: J. Am. Chem. Soc. 126 (2004) 1014.
[Non-Patent Citation 5] Y. Tomonari, H. Murakami, N. Nakashima: Chem. Eur. J. 12 (2006) 4027.
[Non-Patent Citation 6] G. Nakamura, K. Narimatsu, Y. Niidome, N. Nakashima: Chem. Lett. 36 (2007) 1140.
[Non-Patent Citation 7] N. Nakashima, S. Okuzono, H. Murakami, T. Nakai, K. Yoshizawa: Chem. Lett. 32 (2003) 456.
[Non-Patent Citation 8] M. Zheng, A. Jagota, E. D. Semke, B. A. Diner, R. S. Mclean, S. R. Lustig, R. E. Richardson, N. G. Tassi: Nature Mater. 2 (2003) 338.
[Non-Patent Citation 9] A. O.-Acevedo, H. Xie, V. Zorbas, W. M. Sampson, A. B. Dalton, R. H. Baughman, R. K. Draper, I. H. Musselman, G. R. Dieckmann: J. Am. Chem. Soc. 127 (2005) 9512.
[Non-Patent Citation 10] T. Takahashi, C. R. Luculescu, K. Uchida, T. Ishii, H. Yajima: Chem. Lett. 34 (2005)1516.
[Non-Patent Citation 11] N. Minami, Y. Kim, K. Miyashita, S. Kazaoui, B. Nalini: Appl. Phys. Lett. 88 (2006) 093123.
[Non-Patent Citation 12] M. Zheng, A. Jagota, M. S. Strano, A. P. Santos, P. Barone, S. G. Chou, B. A. Diner, M. S. Dresselhaus, R. S. Mclean, G. B. Onoa, G. G. Samsonidze, E. D. Semke, M. Usrey, D. J. Walls: Science 302 (2003) 1545.
[Non-Patent Citation 13] R. Krupke, F. Hennrich, H. V. Lohneysen, M. M. Kappes: Science 301 (2003) 344.

A conventionally known method for dispersing carbon nanotubes requires processing for a suspending solution of single-wall carbon nanotubes, which contain a dispersant, with the use of a horn-type high-power ultrasonic generator in order to effectively disperse the carbon nanotubes. However, such a strong process deteriorates the inherent characteristics of the single-wall carbon nanotubes. For this reason, a more mild method for effectively dispersing carbon nanotubes is required.

### DISCLOSURE OF INVENTION

The present invention was made in order to solve the above problem in the conventional technique, and one of the objects is to provide a method for producing a nanocarbon material dispersion in which individual nanocarbon materials are separated from each other by mild processing. In addition, another object of the present invention is to provide a dispersion in which nanocarbon materials are dispersed in an individually separated state.

In order to solve the above problem, a method for producing a nanocarbon material dispersion according to the present invention includes the steps of: preparing a composition by mixing a nanocarbon material and a dispersion medium containing an amphiphilic triphenylene derivative; and subjecting the composition to a mechanical dispersing processing.
It is preferable that in the step of preparing the composition, a prescribed amount of dispersion medium is divided and added to the nanocarbon material at a plurality of times. In addition, it is more preferable to repeatedly perform the step of adding to the nanocarbon material the dispersion medium by 1/3 to 1/10 of the prescribed amount thereof, and the step of performing the mechanical dispersing processing.
With this producing method, the triphenylene derivative contained in the dispersion medium is adsorbed to the nanocarbon material with priority, and changes the nanocarbon material to be soluble by its amphiphilic property. Therefore, it is possible to easily obtain the dispersion, in which the individual nanocarbon material is dispersed in an isolated state, by subjecting the obtained composition to the mechanical dispersing processing.
In addition, it is possible to easily remove impurities such as amorphous carbon, carbon particles, and the like and aggregates of the carbon nanotubes by subjecting the thus obtained dispersion to an ultracentrifugation processing or the like.

It is preferable that the triphenylene derivative is a semiconductor. With such a producing method, the nanocarbon materials are dispersed in the dispersion medium in a state in which the triphenylene derivative as a semiconductor is adsorbed to the nanocarbon materials. Therefore, the nanocarbon material dispersion to be obtained is suitable for producing the nanocarbon material particularly for the purpose of producing a semiconductor device.

It is preferable that the dispersion medium contains the triphenylene derivative of a structural formula represented as formula (1). Here, each of R1 to R6 is hydrogen or a substituent group of a structural formula represented as formula (2), at least one of R1 to R6 is a substituent group represented by the formula (2), and A and X in the formula (2) represent an alkyl chain and a hydrophilic group, respectively.
Since a triphenylene skeleton at a center is adsorbed to a circumferential wall of the nanocarbon material with priority in the triphenylene derivative used in this producing method, it is possible to obtain a nanocarbon material dispersion which is excellent in the dispersing property of the nanocarbon materials. In addition, the alkyl chain positioned at a side chain of the triphenylene skeleton is wound around and adsorbed to the nanocarbon material, and exhibits an affinity for the nanocarbon materials with specific diameters (chiral coefficients) in accordance with its length. Accordingly, it is possible to easily produce a nanocarbon material dispersion containing nanocarbon materials with specific diameters (chiral coefficients) by using the triphenylene derivative represented by the formula (1). 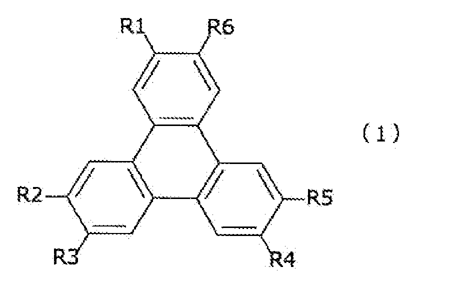 -O-A-X (2)

It is preferable that all of R1 to R6 of the triphenylene derivative are substituent groups represented by the formula (2), and length of alkyl chain contained in each of R1 to R6 is identical. Such a triphenylene derivative is easily produced, and the length of the alkyl chain can be easily adjusted. Accordingly, it is possible to use such a triphenylene derivative for a particularly preferable dispersion medium.

It is applicable that the dispersion medium contains polycyclic aromatic hydrocarbon of a structural formula represented as formula (3). Here, each of R7 to R14 is hydrogen or a substituent group of a structural formula represented as formula (2), at least one of R7 to R14 is a substituent group represented by the formula (2), and A and X in the formula (2) represent an alkyl chain and a hydrophilic group, respectively.
That is, another structure, in which dibenzotetracene obtained by further combining a benzene ring to the triphenylene skeleton via a bonding ring is a main skeleton, is also applicable as a form of the triphenylene derivative, as shown in the formula (3).

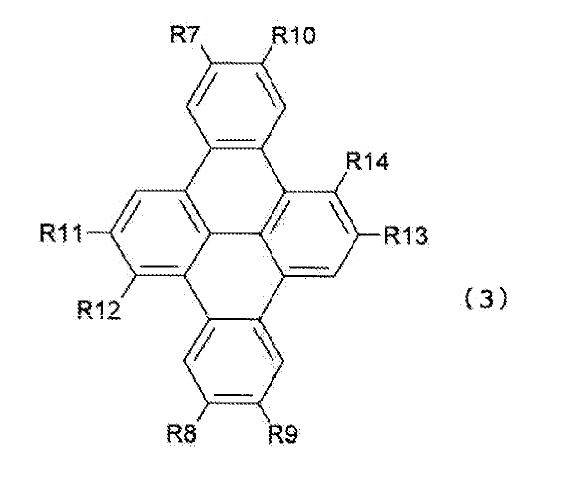

-O-A-X (2)

It is preferable that all of R7 to R10 of the polycyclic aromatic hydrocarbon are substituent groups represented by the formula (2), and the length of an alkyl chain contained in each of R7 to R10 is identical. Such a triphenylene derivative is easily produced, and the length of the alkyl chain can be easily adjusted. Accordingly, it is possible to use such a triphenylene derivative for a particularly preferable dispersion medium.

It is applicable that the dispersion medium contains a plurality of types of triphenylene derivative or polycyclic aromatic hydrocarbon, each of which has an alkyl chain with a different length. With such a producing method, it is possible to obtain the nanocarbon material dispersion in which a plurality of nanocarbon materials with specific compositions is dispersed.

It is preferable that X represent one or more kinds of acidic group selected from a carboxyl group, a sulfonate group, and a phosphate group, a salt thereof, an amino group, or a substituted amino group. The triphenylene derivative containing the above described acid group, an amino group, or a substituted amino group as a hydrophilic group has an excellent affinity for an aqueous solvent. Therefore, it is possible to enhance the dispersing property of the nanocarbon materials to which the triphenylene derivative is adsorbed.

It is preferable that the mechanical dispersing processing is processing using a bath-type ultrasonic wave irradiation apparatus. One of the greatest advantages of the producing method of the present invention is that it is possible to easily disperse the nanocarbon materials in an isolated state even with such a mild dispersing processing.

It is preferable that the nanocarbon material is single wall or multi wall carbon nanotubes.

Next, a nanocarbon material dispersion of the present invention includes a nanocarbon material dispersed in a dispersion medium containing an amphiphilic triphenylene derivative. With this dispersion, since the nanocarbon materials are dispersed in an isolated state by the triphenylene derivative adsorbed to the nanocarbon materials, it is possible to provide nanocarbon materials suitable for the purposes of optical devices, electronic devices, and the like, which use individual characteristics of the nanocarbon materials.

It is preferable that the triphenylene derivative is a semiconductor. With such a configuration, the materials adsorbed to the nanocarbon materials also exhibit semiconductor characteristics. Accordingly, it is possible to provide a structure suitable for the case in which the nanocarbon material structure to be obtained from the nanocarbon material dispersion is used for a semiconductor device, in particular.

The nanocarbon material dispersion which can be obtained by the above-mentioned method for producing the nanocarbon material dispersion has the following characteristics.
First, the dispersion medium is characterized by containing the triphenylene derivative of a structural formula represented as formula (1). Here, each of R1 to R6 is hydrogen or a substituent group of a structural formula represented as formula (2), at least one of R1 to R6 is a substituent group represented by the formula (2), and A and X in the formula (2) represent an alkyl chain and a hydrophilic group, respectively.
In addition, it is preferable that all of R1 to R6 of the triphenylene derivative are substituent groups represented by the formula (2), and length of alkyl chain contained in each of R1 to R6 is identical. 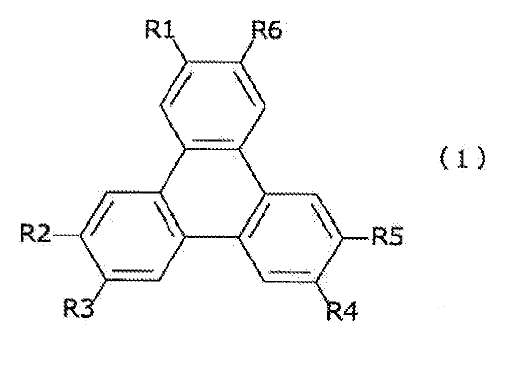 -O-A-X (2)

Next, the dispersion medium is characterized by containing polycyclic aromatic hydrocarbon of a structural formula represented as formula (3). Here, each of R7 to R14 is hydrogen or a substituent group of a structural formula represented as formula (2), at least one of R7 to R14 is a substituent group represented by the formula (2), and A and X in the formula (2) represent an alkyl chain and a hydrophilic group, respectively.
In addition, it is preferable that all of R7 to R10 of the polycyclic aromatic hydrocarbon are substituent groups represented by the formula (2), and the length of an alkyl chain contained in each of R7 to R10 is identical.

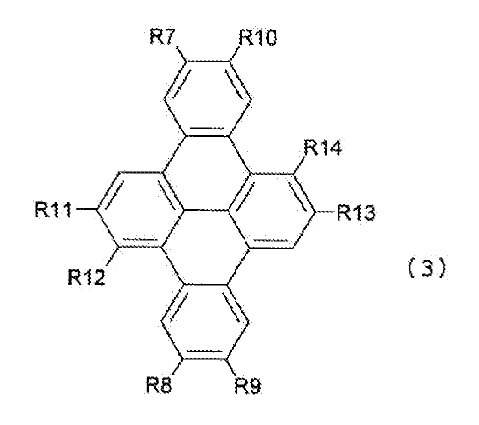

-O-A-X (2)

It is also applicable that the dispersion medium contains a plurality of types of triphenylene derivative, each of which has an alkyl chain with a different length.
In addition, it is preferable that X represent one or more kinds of acidic group selected from a carboxyl group, a sulfonate group, and a phosphate group, a salt thereof, an amino group, or a substituted amino group.
In addition, it is preferable that the nanocarbon material is single wall or multi wall carbon nanotubes.

Moreover, the present invention provides a nanocarbon material structure obtained by drying and solidifying the above-mentioned nanocarbon material dispersion. This structure is configured to be a nanocarbon material structure which can be obtained from the nanocarbon material dispersion in which individual nanocarbon materials are dispersed in an isolated state. Accordingly the nanocarbon material structure can be preferably used for the purposes of an optical device, an electronic device, and the like, which uses the characteristic of the individual nanocarbon material. In addition, the triphenylene derivative is only adsorbed by the nanocarbon material, and does not change or degrade the characteristic of the nanocarbon material. Therefore, the triphenylene derivative makes it possible to cause the nanocarbon material to exhibit its original mechanical characteristic.

According to the present invention, it is possible to produce a dispersion in which individual nanocarbon materials are separated from each other by relatively mild mechanical dispersing processing.
In addition, according to the present invention, it is possible to provide a nanocarbon material dispersion in which nanocarbon materials are dispersed in a dispersion medium in an individually separated state.

### BRIEF DESCRIPTION OF THE DRAWINGS

FIG. 1 is a diagram illustrating a dispersing step in a producing method according to the present invention.
FIG. 2 is a diagram illustrating a dispersion and a supernatant obtained by the producing method according to the present invention.
FIG. 3 is a graph illustrating a result of a light-absorbance measurement.
FIG. 4 is a diagram illustrating a result of a photoluminescence spectroscopy measurement for a sample using a triphenylene derivative.
FIG. 5 is a diagram illustrating a result of a photoluminescence spectroscopy measurement for a sample using an SDBS.
FIG. 6 is a diagram illustrating a result of a photoluminescence spectroscopy measurement for a dispersion using a triphenylene derivative with an alkyl chain length of 6.
FIG. 7 is a diagram illustrating a result of a photoluminescence spectroscopy measurement for a dispersion using a triphenylene derivative with an alkyl chain length of 8.
FIG. 8 is a diagram illustrating a result of a photoluminescence spectroscopic measurement for a dispersion using a triphenylene derivative with an alkyl chain length of 10.

### BEST MODE FOR CARRYING OUT THE INVENTION

Hereinafter, the description will be made of the embodiment of the present invention with reference to the accompanying drawings.
The method for producing a nanocarbon material dispersion according to the present invention is characterized by including a step of preparing a composition by mixing a nanocarbon material with a dispersion medium containing an amphiphilic triphenylene derivative, and a step of subjecting the composition to a mechanical dispersing processing.

It is preferable to use a carbon nanotube as a nanocarbon material. A carbon nanotube has a fiber diameter (diameter) D of about 0.5 to 100 nm and a length L of about 0.1 to 100000 µm, and is a tube-shaped carbon structure having a great aspect ratio L/D of about 20 to 100000000. Such a carbon nanotube can be produced by a method such as an arc discharge method, a laser deposition method, a catalytic chemical vapor deposition method, or the like. The producing method is described in detail in "Carbon Nanotube no Kiso (Basics of Carbon Nanotubes)" by Yahachi Saito and Shunji Bando (Corona Publishing Co., Ltd.), for example.

Carbon nanotubes are classified into two types, that is, a "single-wall carbon nanotube" or a "multi-wall carbon nanotube". A single-wall carbon nanotube is a tube with a thickness of a single-atomic layer, in which one graphene (a carbon hexagonal plane of a single-atomic layer) is closed in a cylindrical shape. Although any one of a single wall carbon nanotube and a multi wall carbon nanotube may be employed as the nanocarbon material of the present invention, a single-wall carbon nanotube is more preferably used.

As a carbon nanotube which is practically used, it is possible to preferably use a carbon nanotube created by a HiPco (High Pressure CO) method. In addition, a single wall carbon nanotube or the like, which is created by an ACCVD (Alcohol Catalytic Chemical Vapor Deposition) method, is also preferably used. Moreover, it is also possible to use Graphite fibril (registered trademark) from Hyperion Catalysis International, Inc. a product from Showa Denko K.K., Pyrograf III (registered trademark) from ASISH, or the like. These are cited herein only by way of examples, and the carbon nanotube of the present invention is not limited thereto.

The carbon nanotube is not limited to a carbon product, and may be a BN (boron nitride) nanotube or the like, which is obtained by substituting boron and nitrogen with at least a part of carbon, for example. Alternatively, the carbon nanotube may be a carbon nanohorn, which is a type of carbon nanotube.

Next, the dispersion medium of the present invention includes an amphiphilic triphenylene derivative and an aqueous solvent. Such a triphenylene derivative can be expressed by a structural formula represented as formula (1). In the formula (1), R1 to R6 are hydrogen or substituent groups of the structural formula represented as formula (2), and at least one of R1 to R6 is a substituent group represented by the formula (2).

The triphenylene derivative represented by the formula (1) has a triphenylene skeleton, and has a configuration in which side chains extend radially from the triphenylene skeleton. A represents an alkyl chain, and X represents a hydrophilic group, in the substituent groups represented by the formula (2) constituting the side chains represented by R1 to R6. Accordingly, the substituent group of the formula (2) is an alkoxy group in which a hydrophilic group is substituted for hydrogen at end.

The triphenylene derivative represented by the formula (1) has an amphiphilic property. In the formula (1) and the formula (2), the triphenylene skeleton and the alkoxy group constitute a hydrophobic (or lipophilic) group, and a hydrophilic group X is combined to this hydrophobic group.

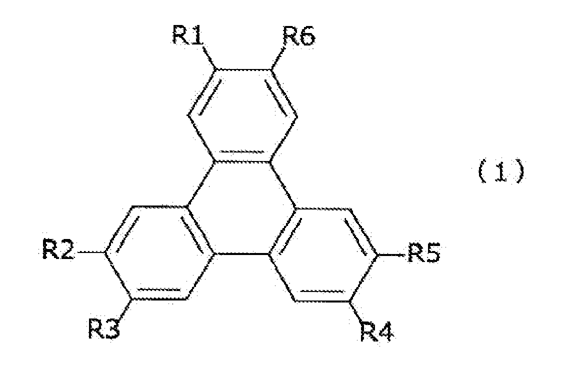

-O-A-X (2)

In the formula (2), the alkyl chain A may be a straight chain, or have a branched shape. The number of the carbons of the alkyl chain A can be arbitrarily selected from about 2 to 20.
Any polar groups, which can be used as a hydrophilic group in an amphiphilic compound, can be applied as a hydrophilic group X. The examples of the hydrophilic group X include a hydroxyl group, a carboxyl group, an oxyalkylene group, an ester group, an amino group, an amide group, a sulfonate group, a methyl group, and the like.
The group X is preferably one or more kinds of acidic group or a salt thereof selected from an carboxyl group, a sulfonate group, and a phosphate group, or an amino group or a substituted amino group (a trimethylammonium group, or the like). They exhibit excellent affinity for aqueous solvents, and can enhance the dispersing property of the carbon nanotubes in the dispersion medium.

In addition, the triphenylene derivative may be a polycyclic aromatic hydrocarbon of a structural formula represented by formula (3). The polycyclic aromatic hydrocarbon represented by the formula (3) has a main skeleton of dibenzo tetracenein in which a benzene ring is combined between two benzene rings, which are positioned outside the triphenylene skeleton, via a combining ring. In addition, side chains represented by R7 to R10 are combined to both ends of the main skeleton in the longitudinal direction, and side chains represented by R11 to R14 are combined to the end of the main skeleton in the short-side direction. R7 to R14 are hydrogen or substituent groups represented by the formula (2), and at least one of R7 to R14 is a substituent group represented by the formula (2) shown in the above chemical formula 10.

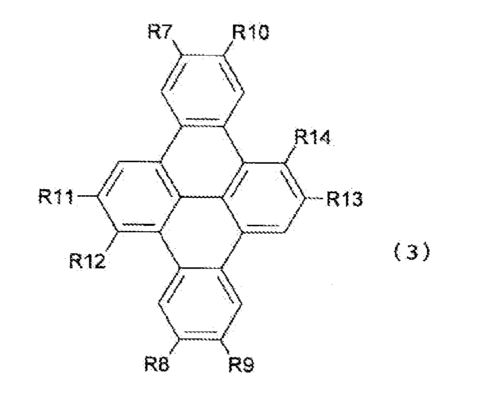

Specific examples of the triphenylene derivative represented by the formula (1) include the ones represented by the following formulae (4) to (7). The triphenylene derivative represented by the formula (4) has a structure in which 6 substituent groups having an alkyl chain A with 10 carbons and a carboxyl group combined to the end of the alkyl chain A radially extend from the triphenylene skeleton. The triphenylene derivative represented by the formula (5) is obtained by changing the number of the carbons of the alkyl chain A in the triphenylene derivative of the formula (4) to 6. The triphenylene derivative represented by the formula (6) is obtained by changing the number of the carbons of the alkyl chain A to 8. The triphenylene derivative represented by the formula (7) is obtained by changing the number of carbons of the alkyl chain to 14.

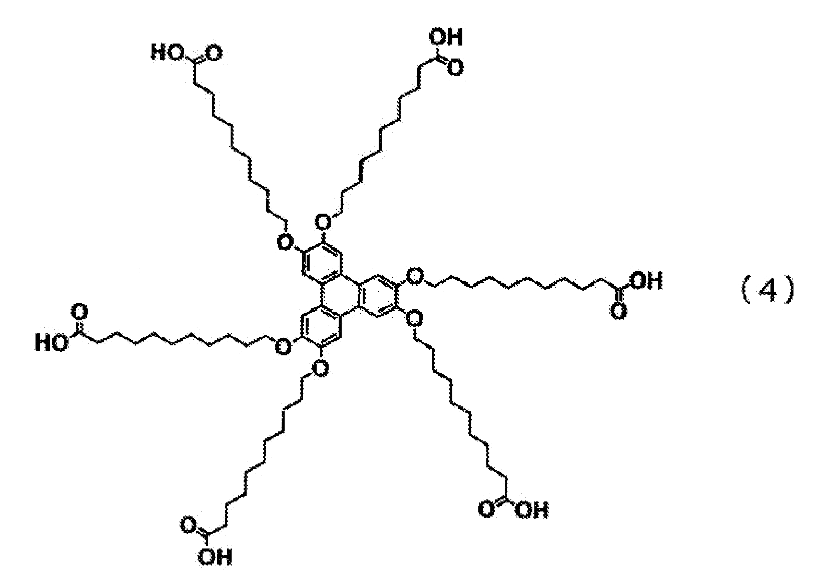

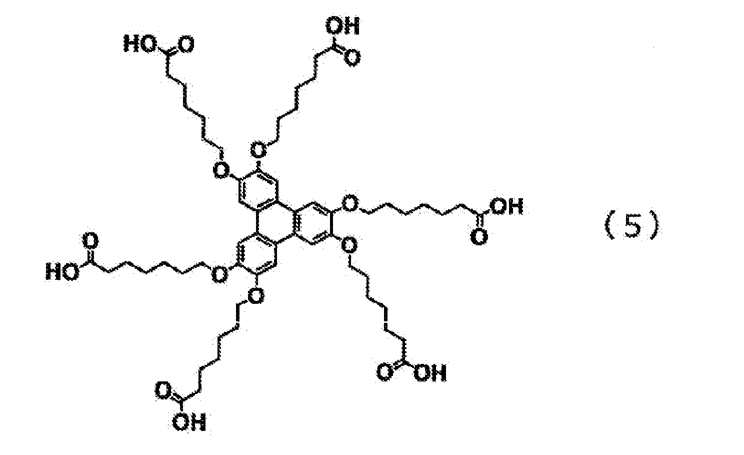

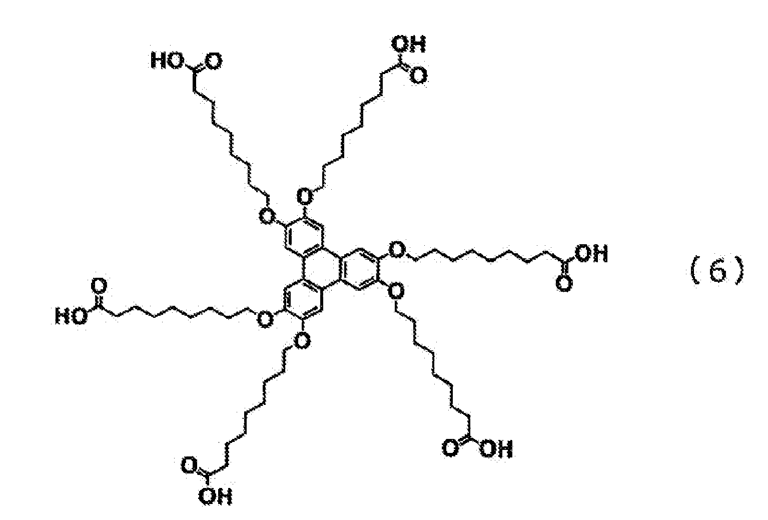

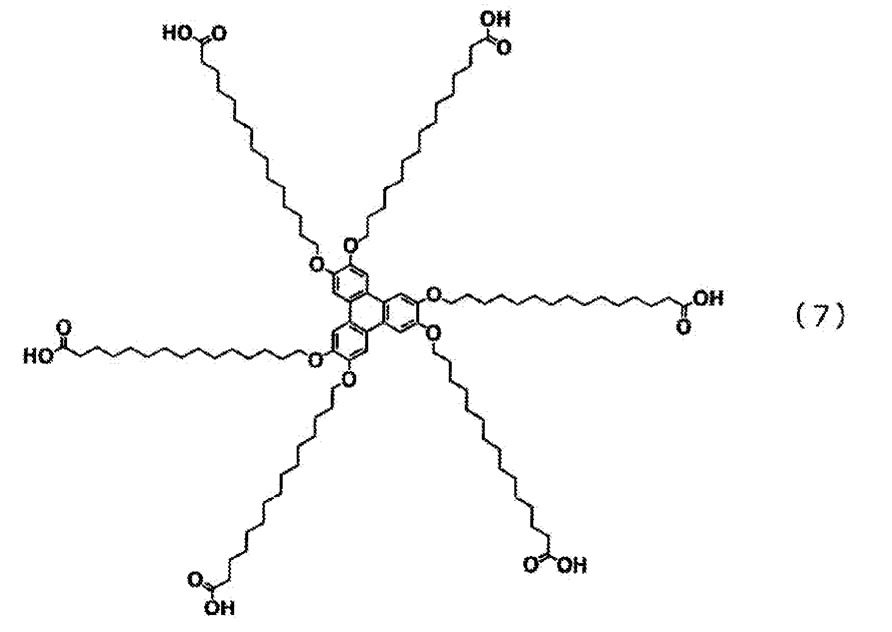

Specific examples of the polycyclic aromatic hydrocarbon represented by the formula (3) include the one represented by the following formula (8). The structure represented by the formula (8) is obtained by arranging a substituent group having an alkyl chain with 10 carbons and a carboxyl group as a hydrophilic group. R11 to R14 represent hydrogen. It is needless to say that the number of carbons of the alkyl chain can be changed in the structure represented by the formula (8).

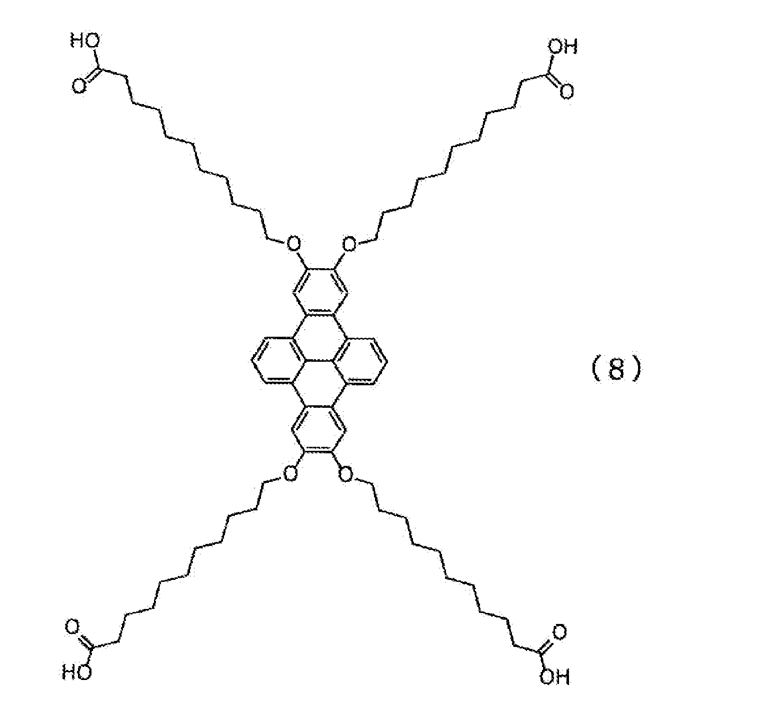

Other specific examples as the polycyclic aromatic hydrocarbon represented by the formula (3) include the ones represented by the following formulae (9) and (10). The structure represented by the formula (9) is obtained by arranging methoxy groups for R7 to R10, and arranging alkoxy groups, each of which has a carboxyl group as a hydrophilic group at the end, for R11 to R14. The structure represented by the formula (10) is obtained by arranging alkoxy groups, each of which has a carboxyl group as a hydrophilic group at the end, for R7 to R10, and arranging methoxy groups for R11 to R14. It is needless to say that the number of carbons of the alkyl chain can be changed in the respective structures represented by the formulae (9) and (10) as well.

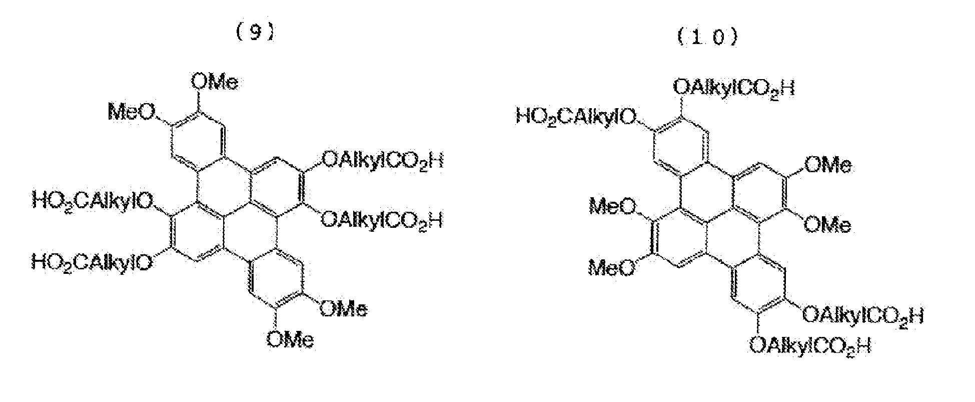

As for the dispersion medium, the aqueous solvent for dissolving or dispersing the above triphenylene derivative may be water such as heavy water or the like alone, or may contain a water-soluble organic solvent with water.
Examples of the water-soluble organic solvent include alcohols (methanol, ethanol, propanol, isopropanol, butanol, isobutanol, secondary butanol, tertiary butanol, benzyl alcohol or the like), polyhydric alcohols (ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol or the like), polyhydric alcohol ethers (ethyleneglycol monomethyl ether, ethyleneglycol monoethyl ether, ethyleneglycol monobutyl ether, diethyleneglycol monomethyl ether, diethyleneglycol monomethyl ether, diethyleneglycol monobuthyl ether, propylene glycol monomethyl ether, propylene glycol monobutyl ether, ethyleneglycol monomethyl ether acetate, triethyleneglycol monomethyl ether, triethyleneglycol monoethyl ether, ethyleneglycol monophenyl ether, propylene glycol monophenyl ether, or the like), amines (ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, tetramethylpropylenediamine, or the like), amides (formamide, N, N-dimethylformamide, N, N-dimethylacetamide, or the like), heterocyclic rings (2-pyrrolidone, N-methyl-2-pyrrolidone, cyclohexylpyrrolidone, 2-oxazolidone, 1, 3-dimethyl-2-imidazolidinone, or the like), sulfoxides (dimethyl sulfoxide, or the like), sulfones (sulfolane, or the like), lower ketones (acetone, methyl ethyl ketone, or the like), tetrahydrofuran, urea, acetonitrile, and the like.

According to the producing method of this embodiment, the above-mentioned dispersion medium containing the triphenylene derivative and the aqueous solvent is prepared, and this is added to carbon nanotubes to prepare a carbon nanotube composition. It is preferable that a prescribed amount of dispersion medium is added to the carbon nanotubes not at one time but at a plurality of times.

More specifically, it is preferable to prepare the carbon nanotube composition by adding the prescribed amount of dispersion medium to the carbon nanotubes by repeatedly performing the step of adding to the carbon nanotubes the dispersion medium by the amount of about 1/3 to 1/10 of the prescribed amount and the step of performing sonication (mechanical dispersing processing) for from about several minutes to 60 minutes. For example, when the prescribed amount of the dispersion medium is 6 ml, the dispersion medium is added to the carbon nanotubes 6 times by 1 ml, and 30-minute sonication is performed every time that the dispersion medium is added.

It is possible to obtain the carbon nanotube composition, in which the carbon nanotubes are uniformly dispersed, by dividing and adding the dispersion medium a plurality of times. The details of this are not clear yet. However, the following reason can be considered.
When the prescribed amount of dispersion medium is added at a time, the triphenylene derivative, which is an amphiphilic substance, forms a large number of micelles and is stabilized. On the other hand, the carbon nanotubes are also stabilized in an aggregation state. Accordingly, the individual triphenylene derivative is not easily adsorbed by the carbon nanotubes. On the other hand, it is considered that when the dispersion medium is gradually added, the dispersion medium is mixed so as to be absorbed into the carbon nanotubes, therefore the micelles of the triphenylene derivative are not easily formed, and the triphenylene derivative can be effectively adsorbed by the carbon nanotubes.

After the carbon nanotube composition is prepared in the above step, it is possible to obtain the carbon nanotube dispersant of the present invention by subjecting the carbon nanotube composition to a mechanical dispersing processing. A dispersing processing using an ultrasonic wave irradiation apparatus, a mixer, a homogenizer, or the like can be applied as the mechanical dispersing processing. According to the producing method of the present invention, it is possible to employ the mildest dispersing process from among the above dispersing processing. It is possible to uniformly disperse the carbon nanotubes even with a bath-type ultrasonic wave irradiation apparatus.

The carbon nanotube composition prepared in the above steps is in a state in which the triphenylene derivative is wound around the carbon nanotube. That is, the triphenylene skeleton, which is a π conjugated compound similarly to a graphene sheet constituting the circumferential wall of the carbon nanotube, is adsorbed to the circumferential wall of the carbon nanotube, and the alkyl chain extending from the triphenylene skeleton is wound around the carbon nanotube. Each of the carbon nanotubes are more isolated one by one when the alkyl chain is wound around the carbon nanotube in the above manner. In addition, the individual carbon nanotube is isolated in the dispersion medium, and can be uniformly dispersed when the hydrophilic group positioned at the end of the alkyl chain changes the individual carbon nanotube to be soluble. Moreover, since the hydrophobic portion (alkyl chain) of the triphenylene derivative does not protrude toward the outside of the carbon nanotube, the triphenylene derivative, which have been adsorbed to the carbon nanotube, is not easily adsorbed by another carbon nanotube or another triphenylene derivative. Accordingly, the carbon nanotubes, once dispersed, do not aggregate again. According to the producing method of this embodiment, the above action makes it possible to uniformly disperse the carbon nanotubes in a simple manner even with the dispersing processing which is significantly mild as compared with that in the conventional method.

Since the triphenylene derivative is not covalently-bonded to the carbon nanotube in the dispersion of this embodiment, the carbon nanotube has substantially the same electrical, mechanical, thermal characteristics as those in the case when the triphenylene derivative is not adsorbed by the carbon nanotube, even when the triphenylene derivative is adsorbed.

In this embodiment, the triphenylene derivatives represented by the formulae (4) to (7) are different from each other only in the length of the alkyl chains. As for the polycyclic aromatic hydrocarbons represented by the formulae (8) to (10) as well, the length of the alkyl chains can be easily adjusted. It is possible to change the diameter of each carbon nanotube (chiral coefficient; winding way), which is to be dispersed in the dispersion medium, by changing the length of the alkyl chain of the triphenylene derivative used in the dispersion medium of the present invention. As for the above action, it has been confirmed that in the dispersion using the triphenylene derivative whose alkyl chain has a different length, the diameters (chiral coefficient) of the dispersed carbon nanotubes are respectively different as will be described later in the embodiment in detail.

It is extremely easy to adjust the length of the alkyl chain of the triphenylene derivative of the present invention, and it is possible to synthesize one with an arbitrary length. Accordingly, it is possible to easily obtain the carbon nanotube dispersion with the composition constituted by the carbon nanotubes with specific diameters (chiral coefficients). When the carbon nanotube is a multi wall carbon nanotube, carbon nanotubes with various diameters exist in the same manner as in the single wall carbon nanotube. Therefore, it is possible to perform a selective dispersion and a separation based on the diameter by using the dispersion medium of the present invention.
In the case of the multi wall carbon nanotube in particular, the diameters of the carbon nanotubes are different from each other depending on the number of the laminated walls in the multi wall structure. Accordingly, it is considered that the dispersion medium of the present invention is effective for the selective separation depending on the number of the laminated walls.
In addition, it is possible to obtain the carbon nanotube dispersion, in which the carbon nanotubes are uniformly dispersed, without performing a strong mechanical dispersing processing. Accordingly, it is possible to effectively produce the carbon nanotube dispersion with a simple facility.

The carbon nanotube dispersion, which can be obtained by the producing method of the present invention, can be coated to or mixed in various substances. For example, it is possible to form a film-shaped carbon nanotube structure by coating or casting the above carbon nanotube dispersion in a sheet shape, and then drying the resultant object. Since such a carbon nanotube structure does not contain the carbon nanotubes which have been aggregated in a bundle shape, it is possible to obtain a film with a high density and a large surface area.

In addition, it is possible to orient the carbon nanotubes in the dispersion in one direction by applying a stress in one direction when coating the dispersion in a sheet shape or by applying an electric field after the coating. Accordingly, it is possible to provide to the coated object or the dried object of the dispersion various electric characteristics and mechanical characteristics due to the orientation thereof.

Moreover, it is possible to produce a carbon nanotube complex by drying the mixture of the carbon nanotube dispersion and a resin material. According to the method for producing the carbon nanotube dispersion of the present invention, the triphenylene derivative is only adsorbed to the circumferential wall of the carbon nanotube, and a mild dispersing processing is performed. Therefore, the structure of the carbon nanotube is not destroyed. For this reason, the characteristics of the carbon nanotube in that it is mechanically solid, exhibits excellent chemical stability, and has a high thermal conductance and in that its hollow shape does not deteriorate. Accordingly, it is possible to obtain a complex which exhibits the original strength and thermal conductance of the carbon nanotube. In addition, the above resin complex can be produced by dispersing the carbon nanotubes in a thermosetting resin, a photo-curable resin, a thermoplastic resin, or the like.

In the carbon nanotube dispersion which can be obtained according to the present invention, carbon nanotubes with specific diameters (chiral coefficients) are dispersed in a state in which they are individually separated. Accordingly, it is easy to obtain a semiconductor carbon nanotube which is required to be applied to a transistor, a memory device, a sensor, or the like and a metal carbon nanotube which is required for a cell electrode material, an electromagnetic shielding agent, or the like. It is possible to easily obtain a carbon nanotube material suitable for these purposes.

Particularly, in the carbon nanotube dispersion of the present invention, the triphenylene derivative as a semiconductor is adsorbed around the carbon nanotube. Accordingly, the triphenylene derivative, which has been adsorbed by the carbon nanotube, does not interfere with the semiconductor characteristic of the carbon nanotube in the carbon nanotube structure which can be obtained by removing a solvent and other liquid components from the dispersion. Accordingly, the carbon nanotube dispersion of this embodiment makes it possible to obtain a carbon nanotube structure suitable for a semiconductor device using a semiconductor-like carbon nanotubes..

The selectivity for a carried object or an inclusion, or the selectivity for an excitation wavelength is required for a purpose such as a drug delivery system (DDS), a thermal treatment by light irradiation, and thus the isolated carbon nanotube with a specific diameter is required. According to the carbon nanotube dispersion of the present invention, it is possible to easily obtain such a carbon nanotube.
Accordingly, it is possible to effectively obtain the carbon nanotube with high purity, which can meet the demands in the fields such as a nanoelectronics device, a field emitter, a gas sensor, a high-strength compound, hydrogen storage, and the like, by the carbon nanotube dispersion of the present invention and the carbon nanotube structure which can be obtained from the carbon nanotube dispersion.

### Mode for the Invention

Hereinafter, more detailed description will be made of the embodiment of the present invention. However, the present invention is not limited to the following embodiment.

### (Processing Apparatus and Analyzing Apparatus)

The sonication was performed using 5510 (180 W, 42 kHz) manufactured by Branson Ultrasonics Division of Emerson Japan Ltd. The ultracentrifugation processing was performed using CS120GX (S100AT6 angle rotor) manufactured by Hitachi Koki Ltd. The light-absorbance measurement was performed using UV-3150 manufactured by Shimadzu Corporation. The spectroscopic analysis was performed using SPEX Fluorolog-3 (liquid nitrogen cooling InGaAs near-infrared detector) manufactured by Horiba Ltd. The slit widths in the spectroscopic analysis on the excitation side and the light emission side were set to 10 nm and 10nm, respectively, and the measurement step was set to 5 nm.

### (Synthesis of TP-CO₂H)

The triphenylene derivative (TP-CO₂H) having a carboxyl group as a hydrophilic group was synthesized by the following method.

2, 3, 6, 7, 10, 11- hexahydroxytriphenylene (802 mg, 2.47 mmol) was suspended in N, N- dimethylformamide (50 mL) under an argon atmosphere, 11-bromoundecanoic acid ethyl ester (7.3 g, 25 mmol) and potassium carbonate (4.3 g, 31 mmol) were added, and the thus obtained object was heated to reflux for 15 hours. The reaction mixture was cooled to a room temperature, then a generated precipitation was filtered, and the obtained solid was washed with ethyl acetate. The filtrate and the washing liquid were distillated together, the obtained solid was purified using a silica gel column chromatography (development solvent: hexane/ethyl acetate (10 to 15 vol%), and the TP-CO₂Et represented by the formula (11) was obtained as a pale yellow solid (3.3 g, 2.1 mmol, yield 84 %).

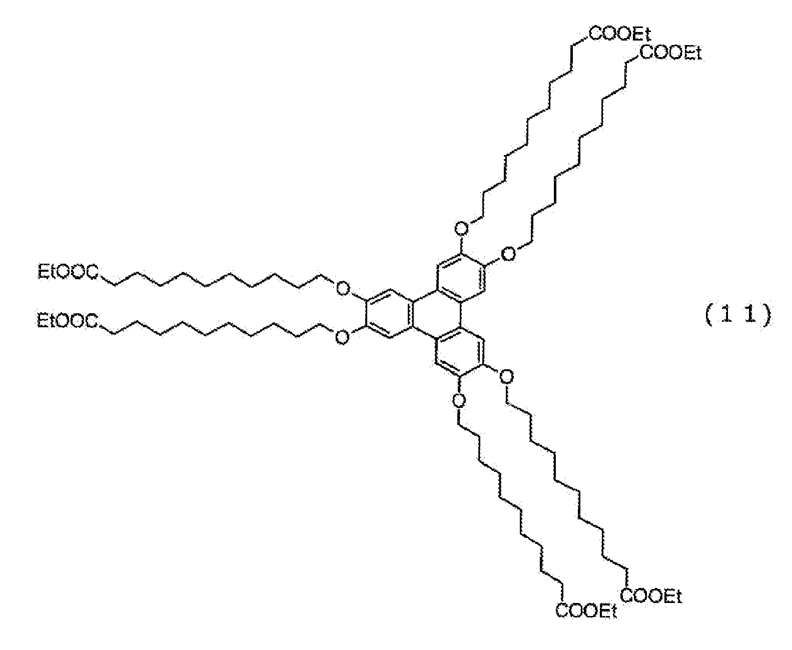

### [Analysis Result]

IR (KBr, cm-1) 1174, 1262, 1389, 1438, 1468, 1519, 1617, 1737, 2852, 2924.
¹H NMR (CDCl₃): δ (ppm) 7.81 (s, 6H), 4.20 (t, J = 6.4 Hz, 12H), 4.10 (q, J = 7.0 Hz, 12H), 2.26 (t, J = 7.6 Hz, 12H), 1.94-1.87 (m, 12H), 1.62-1.15 (m, 24H), 1.41-1.25 (m, 60H), 1.23 (t, J = 7.0 Hz, 18H).
¹³C NMR (CDCl₃): δ (ppm) 173.7, 148.9, 123.6, 107.4, 69.7, 60.2, 34.4, 29.7, 29.6, 29.5, 29.4, 29.2, 26.3, 25.1, 14.4.
MALDI-TOF mass: calculated for C₉₆H₁₅₆O₁₈ [M]⁺: m/z = 1597.13; found: 1597.35.

Then, the TP-CO₂Et (1.25 g, 0.787 mmol) was dissolved in tetrahydrofuran (20 ml) under an argon atmosphere, ethanol (20 mL) and potassium hydroxide solution (2.3 M, 10 mL) were added, and the thus obtained object was heated to reflux for 15 hours. The reaction mixture was cooled to a room temperature, 1N hydrochloric acid solution was added to acidize the reaction mixture, and then the reaction mixture was extracted with dichloromethane. The organic layer was washed with water and dried with anhydrous sodium sulfate, and the solvent was distillated. The obtained solid was recrystallized from acetonitrile, and the TP-CO₂H represented by the formula (4) was obtained as a white solid (1.03 g, 0.720 mmol, yield 92 %).

### [Analysis Result]

IR (KBr, cm⁻¹) 1172, 1263, 1389, 1436, 1468, 1518, 1618, 1707, 2851, 2922. ¹H NMR (DMSO-d₆): δ (ppm) 11.90 (s, 6H), 7.91 (s, 6H), 4.19 (t, J = 6.1 Hz, 12H), 2.16 (t, J = 7.3 Hz, 12H), 1.85-1.73 (m, 12H), 1.55-1.41 (m, 24H), 1.39-1.22 (m, 60H). ¹³C NMR (DMSO-d_{b}): δ (ppm) 174.2, 148.3, 122.7, 107.0, 68.6, 33.7, 29.1, 28.9, 28.8, 28.6, 25.8, 24.5.
MALDI-TOF mass: calculated for C₈₄H₁₃₂0₁₈ [M]⁺: m/z = 1428.94; found: 1428.74.

### (Dispersing processing and Ultracentrifugation Processing)

The TP-CO₂H synthesized in the above manner was dissolved in a sodium hydroxide solution of the same amount as that of the carboxyl group of the TP-CO₂H, and 0.2 wt% ofTP (triphenylene derivative) deuterium oxide solution was prepared. This was added by 1 ml to a single wall carbon nanotube (produced by HiPco method) in a reagent bottle to make a suspension, and 30-minute sonication was performed while being stirred occasionally. The step of adding the TP deuterium oxide solution and the sonication step were performed 6 times, and a carbon nanotube composition with a weight ratio between the single wall carbon nanotube and the triphenylene derivative of 1/12 was finally obtained. A bath-type ultrasonic wave irradiation apparatus was used for the sonication.
Subsequently, the obtained carbon nanotube composition was subjected to an overnight sonication (dispersion), and then to 1-hour ultracentrifugation processing with a centrifugal force of 386000 g.
The uniform dispersion (supernatant) obtained in the above steps was used for the following analysis.

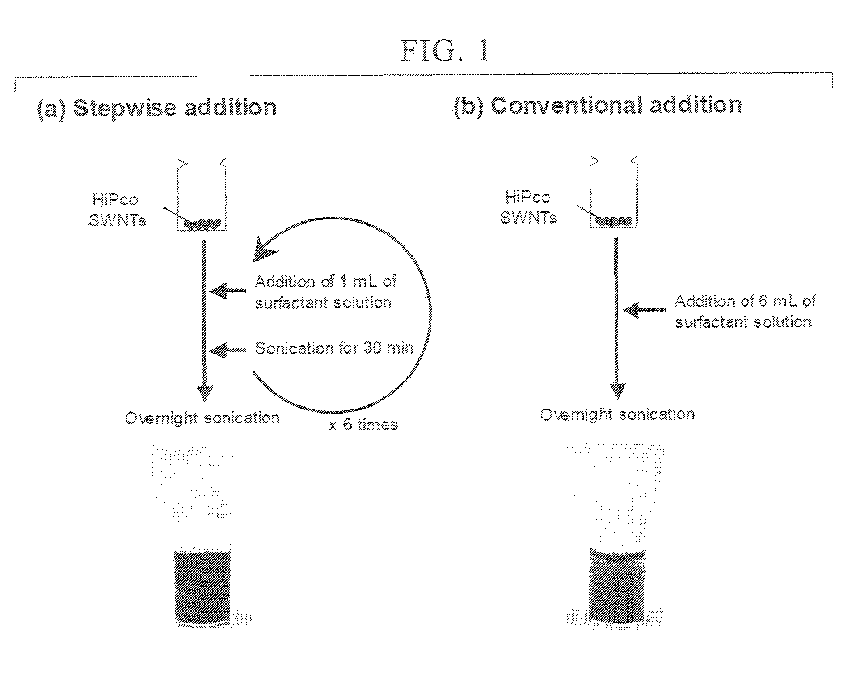

For the above dispersing processing, a dispersion method of the single wall carbon nanotubes with the dispersion medium was contrived. FIG. 1 is a diagram illustrating two types of dispersing methods. First, as shown in FIG. 1(b), the dispersion was prepared by a method of adding a prescribed amount of dispersion medium one time to the single wall carbon nanotubes in a reagent bottle. It was not possible to sufficiently disperse the single wall carbon nanotubes in any samples in each of which the weight ratio between the single wall carbon nanotubes and the triphenylene derivative was changed to be in a range from 1/1 to 1/16.

Thus, as shown in FIG. 1(a), a small amount of dispersion medium was added to the single wall carbon nanotubes, and a stepwise addition, in which the sonication was performed every time when the dispersion medium was added, was performed. As a result, it was possible to obtain a dispersion in which the single wall carbon nanotubes are uniformly dispersed in the sample in which the weight ratio between the single wall carbon nanotubes and the triphenylene derivative was 1/2. The thus obtained carbon nanotube dispersion maintained a satisfactory dispersion property without generating precipitation even after storing the dispersion at a room temperature for several weeks. It was confirmed that it was important to select an appropriate dispersing method for the dispersion of the carbon nanotubes using the dispersion medium containing triphenylene derivative.

In addition, the present inventors evaluated the dispersing method of adding the dispersion medium in a step wise manner for another dispersion medium. That is, a carbon nanotube dispersion was prepared by adding SDBS (dodecylbenzenesulfonic acid sodium), which is typical as a dispersion medium for the single wall carbon nanotubes, to the single wall carbon nanotubes in a stepwise manner. As a result, it was confirmed that even in the carbon nanotube dispersion using SDBS, it was possible to uniformly disperse the single wall carbon nanotubes in the same manner as in the case in which the triphenylene derivative was used.
Accordingly, the dispersing method of adding the dispersion medium in a stepwise manner is a dispersing method which can be applied without depending on the type of the dispersion medium, and extremely useful as a method for uniformly dispersing the single wall carbon nanotubes without using a strong apparatus such as a horn-type ultrasonic wave irradiation apparatus.

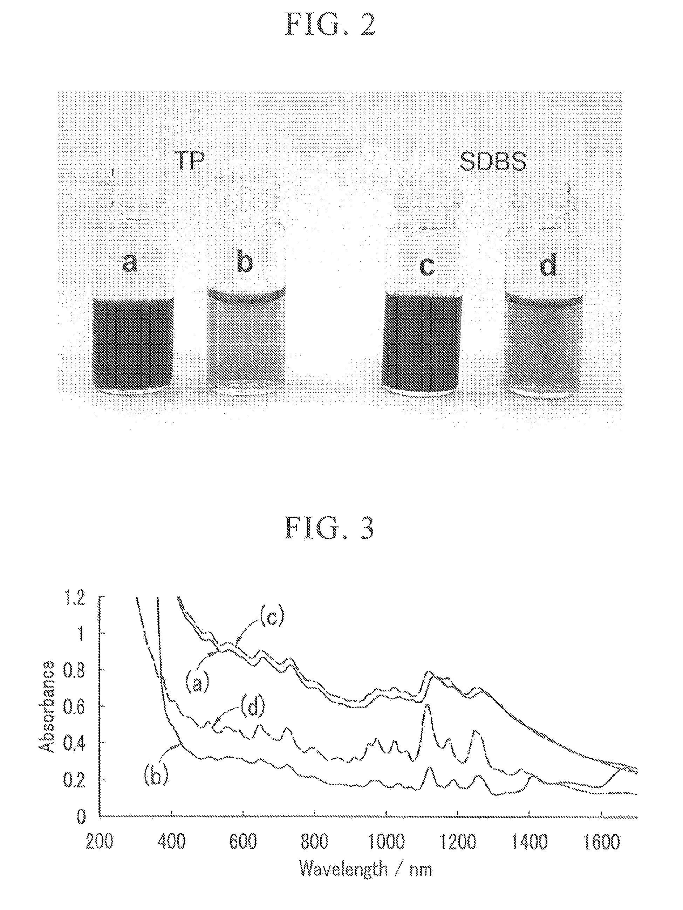

Next, FIG. 2 is a picture showing (a) a carbon nanotube dispersion using a dispersion medium containing the triphenylene derivative produced in the above manner, (c) a carbon nanotube dispersion using a dispersion medium containing SDBS. In addition, these carbon nanotube dispersions (a) and (c) were subjected to ultracentrifugation processing, and thereby the supernatants shown as (b) and (c) were obtained.
The carbon nanotube dispersions (a) and (c) before the ultracentrifugation processing were black liquid whose appearances were substantially the same. These were subjected to the ultracentrifugation processing to remove bundles (aggregates) of the single wall carbon nanotubes or impurities, and the supernatants (b) and (d) which had slightly cloudy transparent colors were obtained. When the supernatants (b) and (d) were compared, the supernatant (d), which was obtained from the carbon nanotube dispersion (c) using SDBS, had a slightly darker color.

### (Analysis)

FIG. 3 is a graph illustrating a result of a light-absorbance measurement for the carbon nanotube dispersions (a) and (c) and the supernatants (b) and (d). In FIG. 3, the curves illustrated by solid lines correspond to the dispersion (a) using the dispersion medium containing the triphenylene derivative and the supernatant (b), and the curves illustrated by broken lines correspond to the dispersion (c) using the dispersion medium containing SDBS and the supernatant (d).
In addition, the light-absorbance measurement for the carbon nanotube dispersions (a) and (c) before the ultracentrifugation was performed using a solvent diluted to seven times with heavy water since the original light-absorbance was excessively large.

As shown in FIG. 3, peaks of a first transition between bands (S₁₁: 900 to 1300 nm) and a second transition between bands (S₂₂: 500 to 800 nm) of the semiconductor-like single wall carbon nanotubes were observed in each of all the dispersions and the supernatants. This means that the single carbon nanotubes were satisfactorily dispersed by the dispersing processing using a bath-type ultrasonic wave irradiation apparatus.
In addition, in the carbon nanotube dispersions (a) and (c) before the ultracentrifugation processing, the above-mentioned peaks are gentle, and the baseline of π-plasmon is high. On the other hand, in the supernatants (b) and (d) after the ultracentrifugation, steep peaks were observed since bundles of the single wall carbon nanotubes and impurities were removed. From this point as well, it is possible to suppose that the single wall carbon nanotubes are satisfactorily dispersed in the dispersion medium.

In FIG. 3, the solutions using the dispersion medium containing SDBS (the dispersion (c) and the supernatant (d)) have great peak intensities than the solutions using the dispersion medium containing the triphenylene derivative (the dispersion (a) and the supernatant (b)), and it is considered that more single wall carbon nanotubes are dispersed in the solutions using SDBS. In this embodiment, however, the solutions were produced using the same weights of SDBS and the triphenylene derivative. For this reason, it is supposed that the difference among the peak intensities occurred since SDBS has a smaller molecular weight and therefore there were more molecules of SDBS, which enhanced the dispersing property.

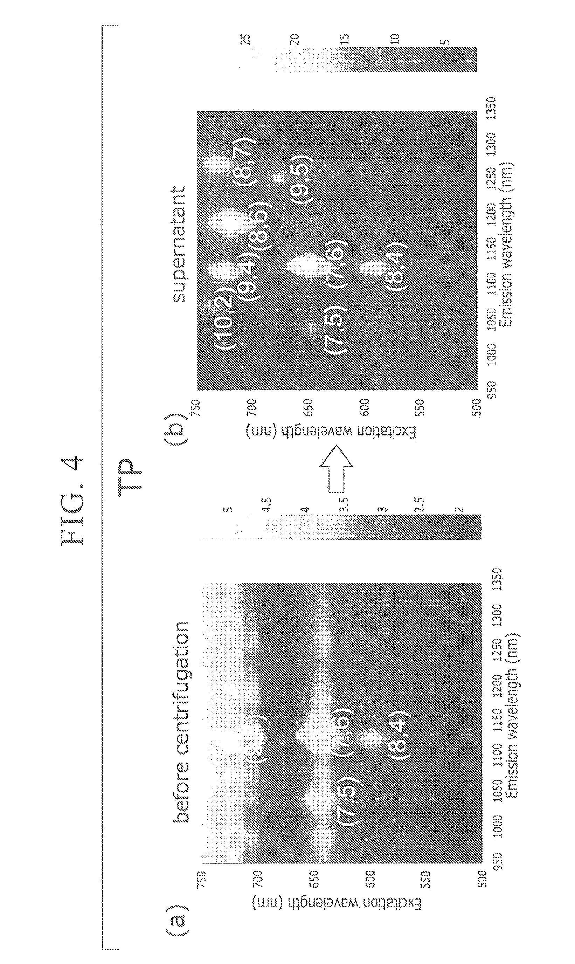

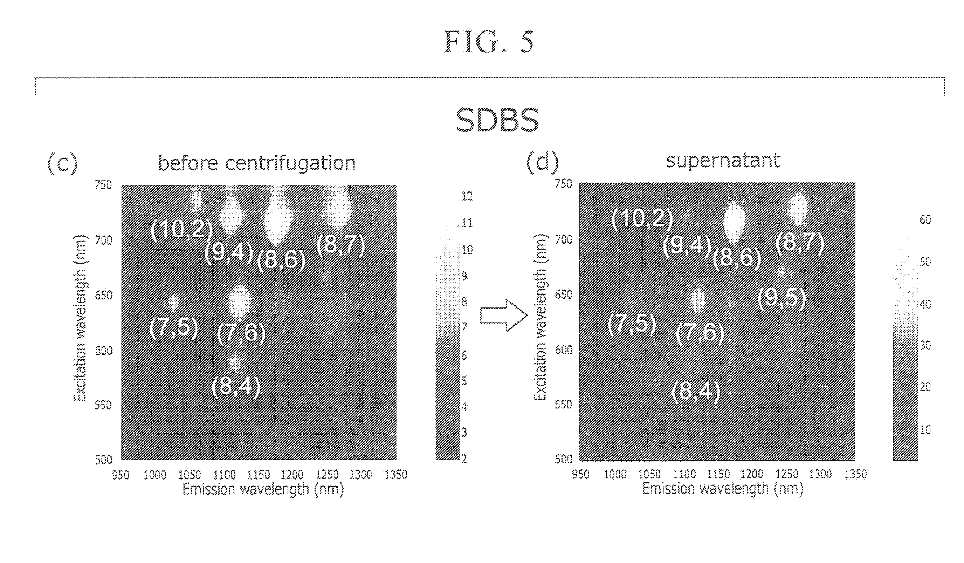

Next, FIG. 4 is a diagram illustrating a result of the photoluminescence spectroscopy (PL) measurement for identifying the distribution of the chiral coefficients of the single wall carbon nanotubes contained in the respective solutions of the carbon nanotube dispersion (a) and the supernatant (b) thereof shown in FIG. 2. FIG. 5 is a diagram illustrating a result of the same photoluminescence spectroscopy measurement for the carbon nanotube dispersion (c) and the supernatant (d) thereof.

As shown in FIGS. 4 and 5, light emission unique to the single wall carbon nanotubes was observed in each of all the solutionts. The PL maps for the carbon nanotube dispersions (a) and (c) before the ultracentrifugation processing were bright as a whole due to the energy transition among the tubes in the bundles of the single wall carbon nanotubes. However, it is possible to allocate the chiral coefficients of the single wall carbon nanotubes without performing the ultracentrifugation processing. In the carbon nanotube dispersion (a) using the dispersion medium containing the triphenylene derivative, the PL peaks corresponding to the chiral coefficients (7, 5), (8, 4), (7, 6), and (9, 4) were observed. The light emission wavelength corresponding to three PL peaks ((9, 4), (7, 6), and (8, 4)) is about 1150 nm, and corresponds to the position where the strong absorption was observed in the graph of the light-absorbance shown in FIG. 3.

On the other hand, when the ultracentrifugation was performed, the bundles of the single wall carbon nanotubes were removed, whereby there was no energy transition due to the bundles of the single wall carbon nanotubes in the supernatant (b) after the ultracentrifugation processing, and the respective PL intensities increased. In the supernatant (b), a PL peak, which had not been observed in the carbon nanotube dispersion (a), was newly observed. Specifically, weak peaks corresponding to the chiral coefficients (9, 5) and (8, 7) were observed. These correspond to large light-absorbance peaks of 1250 nm shown in FIG. 3. Moreover, peaks corresponding to the chiral coefficients (10, 2) and (8, 6) were also detected.

Although the PL peaks detected in the supernatants (b) and (d) were similar, peaks of (8, 6), (8, 7), and (10, 2), which had not been observed in the carbon nanotube dispersion (a) before the ultracentrifugation, were observed in the carbon nanotube dispersion (c) using SDBS. In addition, in the solution using the triphenylene derivative, strong PL peaks corresponding to the chiral coefficients in a wider range than that for the solution using SDBS were observed. From these facts, it is supposed that the compositions of the single wall carbon nanotubes to be dispersed are different from each other in these two solutions.

### (Verification of Diameter Selectivity)

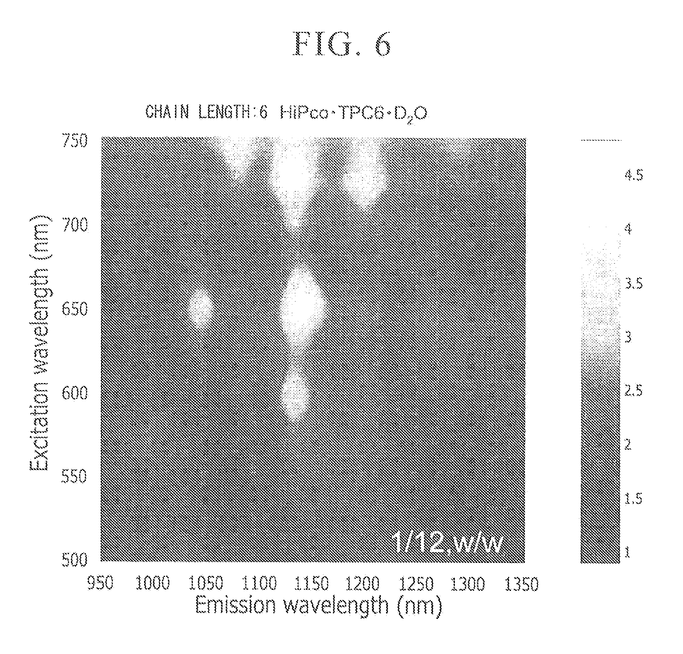

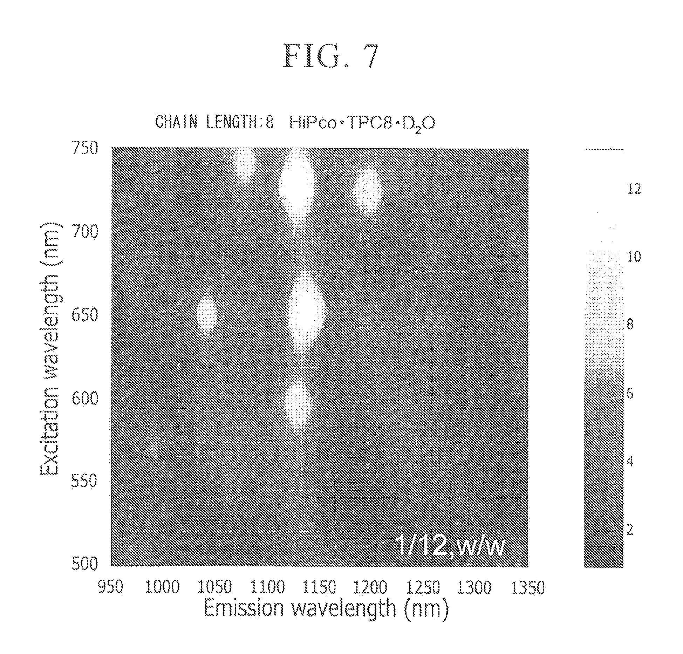

Next, the description will be made of a verification result regarding the diameter selectivity for the single wall carbon nanotubes based on the difference in the length of the alkyl chains in the triphenylene derivatives.
In this embodiment, three types of triphenylene derivatives having different length of alkyl chains were produced, and the carbon nanotube dispersions using the dispersant media containing therein were prepared. In addition, the PL measurement was performed for the supernatants obtained by subjecting the respective carbon nanotube dispersions to the ultracentrifugation processing. The method for producing the carbon nanotube dispersion and the method of the PL measurement were the same as those which have already been described.
Three types of triphenylene derivatives, that is, the triphenylene derivative (6 carbons) represented by the formula (5), the triphenylene derivative (8 carbons) represented by the formula (6), and the triphenylene derivative (10 carbons) represented by the formula (4) were used. The results corresponding to each of them are shown in FIGS. 6 to 8, respectively.

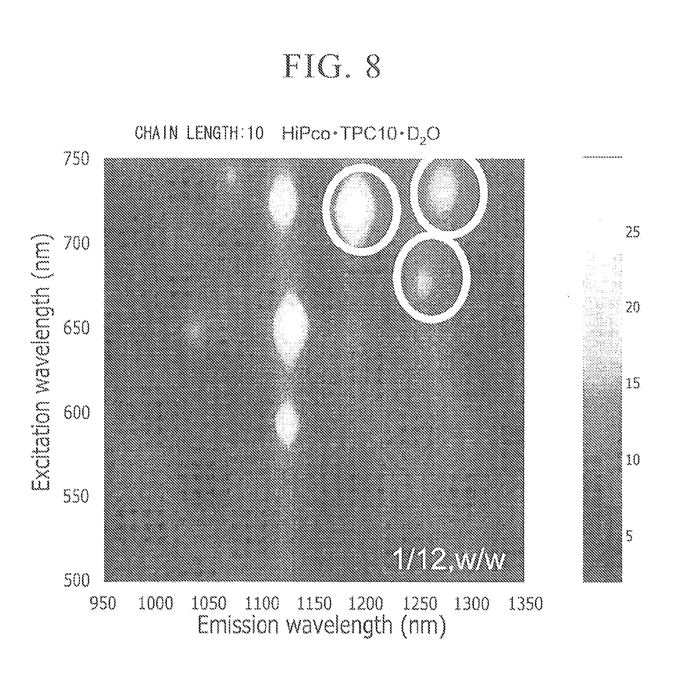

When FIGS. 6 to 8 are compared, the peak positions and the peak intensities of the PL were changed in accordance with the length of the alkyl chains. Specifically, for the sample using the triphenylene derivative with 10 carbons shown in FIG. 8, the peak intensity at positions where white circles are marked was greater than that for the other samples, and the peak intensity at the other positions was small. From this point, it was confirmed that it was possible to change the structures of the single wall carbon nanotubes to be dispersed by adjusting the length of the alkyl chain.

### INDUSTRIAL APPLICABILITY

The carbon nanotube dispersion of the present invention is obtained by dispersing the carbon nanotubes in a state in which an individual carbon nanotube is isolated, and can easily contain carbon nanotubes with specific diameters (chiral coefficients). Therefore, the carbon nanotube dispersion of the present invention can be applied to various optical devices and electronic devices, and the application range thereof is significantly wide.

## Claims

1. A method for producing a nanocarbon material dispersion comprising the steps of:
preparing a composition by mixing a nanocarbon material and a dispersion medium containing an amphiphilic triphenylene derivative; and
subjecting the composition to a mechanical dispersing processing.

2. The method for producing the nanocarbon material dispersion according to claim 1, wherein the triphenylene derivative is a semiconductor.

3. The method for producing the nanocarbon material dispersion according to claim 1 or 2, wherein the dispersion medium comprises the triphenylene derivative having a structure represented by formula (1): 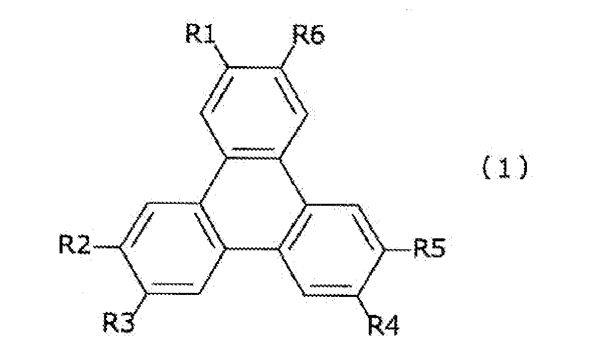 wherein each of R1 to R6 is hydrogen or a substituent group of a structural formula represented as formula (2), at least one of R1 to R6 is a substituent group represented by the formula (2):
-O-A-X (2)
wherein A represents an alkyl chain and X represents a hydrophilic group.

4. The method for producing the nanocarbon material dispersion according to claim 3, wherein all of R1 to R6 of the triphenylene derivative are substituent groups represented by the formula (2), and length of alkyl chain contained in each of R1 to R6 is identical.

5. The method for producing the nanocarbon material dispersion according to claim 1 or 2,
wherein the dispersion medium comprises polycyclic aromatic hydrocarbon having a structure represented by formula (3): 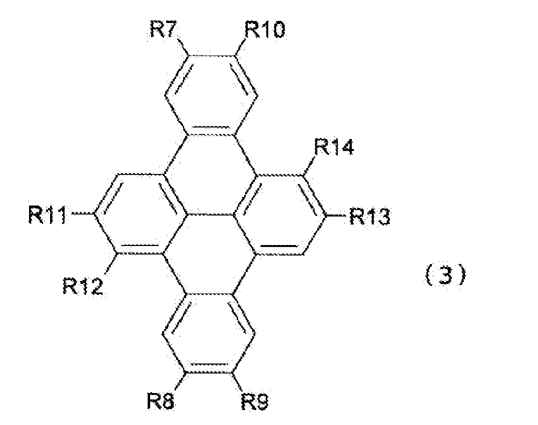 wherein each of R7 to R14 is hydrogen or a substituent group of a structural formula represented as formula (2), at least one of R7 to R14 is a substituent group represented by the formula (2):
-O-A-X (2)
wherein A represents an alkyl chain and X represents a hydrophilic group.

6. The method for producing the nanocarbon material dispersion according to claim 5, wherein all of R7 to R10 of the polycyclic aromatic hydrocarbon are substituent groups represented by the formula (2), and length of alkyl chain contained in each of R7 to R10 is identical.

7. The method for producing the nanocarbon material dispersion according to claim 4 or 6, wherein the dispersion medium comprises a plurality of types of the triphenylene derivative or the polycyclic aromatic hydrocarbon, each of which has an alkyl chain with a different length.

8. The method for producing the nanocarbon material dispersion according to any one of claims 1 to 7, wherein X represents one or more kinds of acidic group selected from a carboxyl group, a sulfonate group, and a phosphate group, a salt thereof, an amino group, or a substituted amino group.

9. The method for producing the nanocarbon material dispersion according to any one of claims 1 to 8, wherein the mechanical dispersing processing is processing using a bath-type ultrasonic wave irradiation apparatus.

10. The method for producing the nanocarbon material dispersion according to any one of claims 1 to 9, wherein the nanocarbon material is single wall or multi wall carbon nanotubes.

11. A nanocarbon material dispersion comprising:
a nanocarbon material dispersed in a dispersion medium comprising an amphiphilic triphenylene derivative.

12. The nanocarbon material dispersion according to claim 11, wherein the triphenylene derivative is a semiconductor.

13. The nanocarbon material dispersion according to claim 11 or 12, wherein the dispersion medium comprises the triphenylene derivative of a
structural formula represented as formula (1): 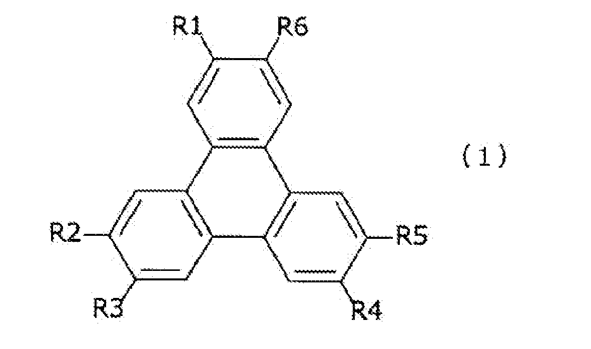 wherein each of R1 to R6 is hydrogen or a substituent group of a structural formula represented as formula (2), at least one of R1 to R6 is a substituent group represented by the formula (2):
-O-A-X (2)
wherein A represents an alkyl chain and X represents a hydrophilic group.

14. The nanocarbon material dispersion according to claim 13, wherein all of R1 to R6 of the triphenylene derivative are substituent groups represented by the formula (2), and length of alkyl chain contained in each of R1 to R6 is identical.

15. The nanocarbon material dispersion according to claim 11 or 12,
wherein the dispersion medium comprises polycyclic aromatic hydrocarbon of a structural formula represented as formula (3): 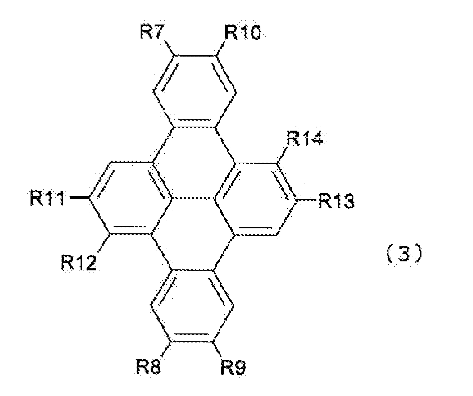 wherein each of R7 to R14 is hydrogen or a substituent group of a structural formula represented as formula (2), at least one of R7 to R14 is a substituent group represented by the formula (2):
-O-A-X (2)
wherein A represents an alkyl chain and X represents a hydrophilic group.

16. The nanocarbon material dispersion according to claim 15, wherein all of R7 to R10 of the polycyclic aromatic hydrocarbon are substituent groups represented by the formula (2), and length of alkyl chain contained in each of R7 to R10 is identical.

17. The nanocarbon material dispersion according to claim 14 or 16, wherein the dispersion medium comprises a plurality of types of the triphenylene derivative or the polycyclic aromatic hydrocarbon, each of which has the alkyl chain with a different length.

18. The nanocarbon material dispersion according to any one of claims 12 to 17, wherein X represents one or more kinds of acidic group selected from a carboxyl group, a sulfonate group, and a phosphate group, a salt thereof, an amino group, or a substituted amino group.

19. The nanocarbon material dispersion according to any one of claims 12 to 18, wherein the nanocarbon material is single wall or multi wall carbon nanotubes.

20. A nanocarbon material structure obtained by drying and solidifying the nanocarbon material dispersion according to any one of claims 11 to 19.
